Europäisches Patentamt

European Patent Office

Office européen des brevets

(19)

(11) Veröffentlichungsnummer: **0 320 036**
**B1**

# EUROPÄISCHE PATENTSCHRIFT

(12)

(45) Veröffentlichungstag der Patentschrift:
18.04.90

(21) Anmeldenummer: 88202625.5

(22) Anmeldetag: 23.11.88

(51) Int. Cl.⁴: **F23J 1/08**, B01D 46/00,
B01D 39/20, C04B 38/00

(54) Verfahren zur Abscheidung der Asche aus dem bei der Verbrennung von Kohle anfallenden Gas.

(30) Priorität: 09.12.87 DE 3741604

(43) Veröffentlichungstag der Anmeldung:
14.06.89 Patentblatt 89/24

(45) Bekanntmachung des Hinweises auf die Patenterteilung:
18.04.90 Patentblatt 90/16

(84) Benannte Vertragsstaaten:
DE ES GB IT

(56) Entgegenhaltungen:
FR-A- 2 308 864
US-A- 4 574 711

(73) Patentinhaber: METALLGESELLSCHAFT AG,
Reuterweg 14 Postfach 3724, D-6000 Frankfurt/M.1(DE)

(72) Erfinder: Weber, Ekkehard, Prof. Dr., Amselweg 6,
D-4300 Essen 17(DE)
Erfinder: Schulz, Reinhard, Selbertz Strasse 4,
D-4300 Essen 1(DE)

## Beschreibung

Die Erfindung bezieht sich auf ein Verfahren zur Abscheidung der flüssigen Asche aus dem bei der Verbrennung von Kohle mit Luft unter einem Druck von 2 bis 30 bar anfallenden Verbrennungsgas, bei dem das Verbrennungsgas mit einer Temperatur von 1 200 bis 1 700°C durch mindestens ein in der Brennkammer angeordnetes, poröses, gasdurchlässiges Filterelement geführt wird.

Bei einem derartigen Verfahren wird die zur Verbrennung der Kohle benötigte Luft in einer solchen Menge zugegeben, daß der gesamte Kohlenstoff zu $CO_2$ reagieren kann und daß im Verbrennungsgas noch ein geringer Sauerstoffgehalt vorhanden ist. Die Verbrennung wird also mit einer überstöchiometrischen Sauerstoffmenge durchgeführt.

Es wurde gefunden, daß die Standzeit der beim bekannten Verfahren verwendeten keramischen Filterelemente, deren Hauptbestandteile $Al_2O_3$, $SiO_2$, MgO und/oder $ZrO_2$ sind, schwankende Werte aufweist. Der Erfindung liegt daher die Aufgabe zugrunde, ein Verfahren zur Abtrennung flüssiger Asche zu schaffen, bei dem die Filterelemente eine gleichbleibend lange Standzeit besitzen.

Die der Erfindung zugrundeliegende Aufgabe wird dadurch gelöst, daß die Verbrennung mit einem Molverhältnis $C : O_2 = 1 : 0,6$ bis $1 : 0,99$ durchgeführt wird und daß das Filterelement aus Kohlenstoff, Carbiden des Bors, Siliciums, Titans, Zirkons oder Hafniums, Nitriden des Bors, Siliciums, Titans, Zirkons oder Hafniums, Boriden des Titans, Zirkons oder Hafniums und/oder aus Oxiden des Aluminiums, Siliciums, Magnesiums oder Zirkons besteht. Es hat sich also gezeigt, daß bei der nach der Erfindung vorgesehenen unterstöchiometrischen Verbrennung der Kohle, bei welcher die der Verbrennung zugeführte Sauerstoffmenge nicht zur quantitativen Umwandlung des Kohlenstoffs zu Kohlendioxid ausreicht, in Gegenwart reduzierender Verbrennungsgase dann eine besonders wirksame und konstant gute Abscheidung der flüssigen Asche möglich ist, wenn gemäß der Erfindung ein Filterelement verwendet wird, das aus Kohlenstoff, Carbiden des Bors, Siliciums, Titans, Zirkons oder Hafniums, Nitriden des Bors, Siliciums, Titans, Zirkons oder Hafniums, Boriden des Titans, Zirkons oder Hafniums und/oder aus Oxiden des Aluminiums, Siliciums, Magnesiums oder Zirkons besteht. Insbesondere haben sich Filterelemente bewährt, die aus Kohlenstoff, SiC oder $Si_3N_4$ zusammengesetzt sind. Obwohl die unterstöchiometrische Verbrennung kohlenstoffhaltiger Brennstoffe an sich bekannt ist, konnte nicht erwartet werden, daß aus den dabei entstehenden, reduzierend wirkenden, CO-haltigen Verbrennungsgasen die flüssige Asche mit dem erfindungsgemäßen Filterelement abgetrennt werden kann, ohne daß es zu Verstopfungen des Filterelements kommt. Insbesondere wurde bei der unterstöchiometrischen Verbrennung keine Rußbildung beobachtet, die das Abtrennen der flüssigen Asche durch Verstopfung des Filterelements behindern könnte. Die sehr heißen, reduzierend wirkenden Verbrennungsgase können vor oder nach ihrem Durchgang durch eine Gasturbine problemlos einer Nachverbrennung unterworfen werden, so daß der Kohlenstoffgehalt der Kohle letztlich quantitativ in $CO_2$ umgewandelt wird.

In weiterer Ausgestaltung der Erfindung ist vorgesehen, daß das Filterelement 1 bis 1 000 Poren/$cm^2$ hat und daß die offene Porosität des Filterelements zwischen 30 und 90 % liegt. Bei Verwendung eines derartig ausgebildeten Filterelements werden Restgehalte von weniger als 5 mg Staub/$m^3$ Verbrennungsgas erreicht. Unter der offenen Porosität ist der Volumenanteil der Poren des Filterelements am Gesamtvolumen des Filterelements zu verstehen. Ferner ist in weiterer Ausgestaltung der Erfindung vorgesehen, daß die Verbrennungsluft mit Sauerstoff angereichert ist. Durch diese Maßnahme werden insbesondere bei der unterstöchiometrischen Verbrennung erwünscht hohe Verbrennungstemperaturen erreicht.

Das erfindungsgemäße Verfahren kann vorteilhaft in einer Vorrichtung durchgeführt werden, die aus einer Brennkammer besteht, welche mindestens einen Brenner, einen Abgaskanal sowie eine Aschenaustrags-Einrichtung aufweist und in der zwischen dem Brenner und dem Abgaskanal mindestens ein entsprechend der Erfindung gestaltetes Filterelement so angeordnet ist, daß das gesamte Verbrennungsgas durch das Filterelement hindurchtritt. Das Filterelement ist in der Brennkammer also so anzuordnen, daß der Verbrennungsraum von den Teilen der Brennkammer getrennt wird, die der Abfuhr der heißen, gereinigten Verbrennungsgase dienen. Eine derartige Anordnung ist möglich, da Klebemittel bekannt sind, mit denen das Filterelement und die feuerfeste Auskleidung der Brennkammer fest miteinander verbunden werden können. Der durch das Filterelement verursachte Druckverlust ist außerordentlich gering und liegt bei ca. 500 pa.

Das nach der Erfindung zu verwendende Filterelement kann aus den vorgenannten chemischen Verbindungen (Rohstoffe) nach folgenden bekannten Verfahren hergestellt werden:

a) Sinterung von Preßlingen, die aus den Rohstoffen bestehen;
b) Tränken eines Schwamms mit einer Suspension, welche die Rohstoffe enthält, und Brennen des getränkten Schwamms;
c) Sinterung von Preßlingen, die aus den Rohstoffen und NaCl bestehen, und nachfolgendes Herauslösen des NaCl.

## Patentansprüche

1. Verfahren zur Abscheidung der flüssigen Asche aus dem bei der Verbrennung von Kohle mit Luft unter einem Druck von 2 bis 30 bar anfallenden Verbrennungsgas, bei dem das Verbrennungsgas mit einer Temperatur von 1 200 bis 1 700°C durch mindestens ein in der Brennkammer angeordnetes, poröses, gasdurchlässiges Filterelement geführt wird, dadurch gekennzeichnet, daß die Verbrennung mit einem Molverhältnis $C : O_2 = 1 : 0,6$ bis $1 : 0,99$ durchgeführt wird und daß das Filterelement aus Kohlenstoff, Carbiden des Bors, Siliciums, Titans, Zirkons oder Hafniums, Nitriden des Bors, Siliciums, Titans, Zirkons oder Hafniums, Boriden des Titans, Zirkons oder Hafniums und/oder aus Oxiden des Aluminiums, Siliciums, Magnesiums oder Zirkons besteht.

2. Verfahren nach Anspruch 1, dadurch gekennzeichnet, daß das Filterelement 1 bis 1 000 Poren/cm² hat und daß die offene Porosität des Filterelements zwischen 30 und 90 % liegt.

3. Verfahren nach den Ansprüchen 1 bis 2, dadurch gekennzeichnet, daß die Verbrennungsluft mit Sauerstoff angereichert ist.

## Claims

1. Process for the separation of the liquid ash from the combustion gas occurring upon the combustion of coal with air at a pressure of 2 to 30 bar, in which the combustion gas is passed at a temperature of 1,200 to 1,700°C through at least one porous, gas-permeable filter element arranged in the combustion chamber, characterised in that the combustion is carried out with a molar ratio $C : O_2 = 1 : 0.6$ to $1 : 0.99$, and that the filter element is made of carbon, carbides of boron, of silicon, of titanium, of zirconium or of hafnium, nitrides of boron, of silicon, of titanium, of zirconium or of hafnium, borides of titanium, of zirconium or of hafnium, and/or of oxides of aluminium, of silicon, of magnesium or of zirconium.

2. Process according to Claim 1, characterised in that the filter element has 1 to 1,000 pores/cm² and that the open porosity of the filter element is between 30 and 90%.

3. Process according to Claims 1 to 2, characterised in that the combustion air is enriched with oxygen.

## Revendications

1. Procédé pour séparer les cendres liquides du gaz de combustion se formant lors de la combustion du charbon par de l'air sous une pression de 2 à 30 bar, qui consiste à envoyer le gaz de combustion à une température de 1200 à 1700°C dans au moins un élément filtrant, perméable au gaz et poreux, disposé dans la chambre de combustion, caractérisé en ce qu'il consiste à effectuer la combustion avec un rapport molaire $C : O_2$ allant de $1 : 0,6$ à $1 : 0,99$ et en ce que l'élément filtrant est en carbone, en carbure de bore, en carbure de silicium, en carbure de titane, en carbure de zirconium ou en carbure d'hafnium, en nitrure de bore, en nitrure de silicium, en nitrure de titane, en nitrure de zirconium ou en nitrure d'hafnium, en borure de titane, en borure de zirconium ou en borure d'hafnium et/ou en oxyde d'aluminium, en oxyde de silicium, en oxyde de magnésium ou en oxyde de zirconium.

2. Procédé suivant la revendication 1, caractérisé en ce que l'élément filtrant a de 1 à 1000 pores/cm² et en ce que la porosité ouverte de l'élément filtrant est comprise entre 30 et 90%.

3. Procédé suivant la revendication 1 ou 2, caractérisé en ce que l'air de combustion est enrichi en oxygène.